# EUROPÄISCHE PATENTSCHRIFT

(11) **EP 1 158 185 B1**
(45) Veröffentlichungstag und Bekanntmachung des Hinweises auf die Patenterteilung: **31.08.2005**
(21) Anmeldenummer: 01106627.1
(22) Anmeldetag: 16.03.2001
(51) Int. Cl.: F16B 7/04, F16B 2/24

(54) **Schnellbefestigungselement**
Quick-fastening element
Elément de fixation rapide

(30) Priorität: 07.06.2000 DE 20010037 U; 26.05.2000 DE 20009395 U
(43) Veröffentlichungstag der Anmeldung: 28.11.2001
(73) Patentinhaber: PAUL HETTICH GMBH & CO., D-32278 Kirchlengern (DE)
(72) Erfinder: Jährling, Peter, 32257 Bünde (DE)
(74) Vertreter: Dantz, Jan Henning

(56) Entgegenhaltungen:
- EP-A- 0 518 540
- DE-A- 2 701 879
- DE-A- 4 227 585
- FR-A- 1 335 491
- FR-A- 2 443 197
- GB-A- 2 311 664

## Beschreibung

Die vorliegende Erfindung betrifft ein Schnellbefestigungselement nach dem Oberbegriff des Anspruches 1. Solche Schnellbefestigungselemente werden insbesondere zur Befestigung von Führungsschienen an gitterähnlichen Seitenteilen eingesetzt, die beispielsweise aus Draht oder Stangen gebildet sind. Diese Seitenteile sind in Haushaltsgeräten, wie Geschirrspülern, Backöfen etc. zu finden, wobei ein Einsatz in anderen Möbeln ebenfalls möglich ist.

Bei solchen in Haushaltsgeräten oder Möbeln befestigbaren Gittern sind meist mehrere parallel zueinander verlaufende horizontale Stangen vorgesehen, die an vertikalen Stangen befestigt sind. Die horizontalen Stangen können gekröpft sein, um durch die Kröpfungen in den Innenraum des Haushaltsgerätes hervorzustehen, so dass zwischen die Gitterstäbe Fachböden, Backbleche oder Gitterkörbe eingeschoben werden können. Um die Auszugslänge solcher einschiebbaren Einsätze zu verlängern oder die Ausziehbewegung durch die Verwendung spezieller Gleit-, Rollen- oder Kugelführungen zu erleichtern, werden an die Seitenteile auch Führungsschienen befestigt. Diese Befestigung der Führungsschienen erfolgt durch Anschrauben eines Gegenbleches oder Einklipsen mittels an den Führungsschienen angebrachter Blechklammern.

Die verwendeten Blechklammern sind im wesentlichen C-förmig ausgebildet und umgreifen mit einem oberen Abschnitt eine obere Stange und mit dem unteren Abschnitt eine untere Stange des Seitenelementes. Diese Blechklammern weisen jedoch den Nachteil auf, dass sich bei Belastung die obere tragende Stange nach unten verbiegen kann und die untere Stange außer Eingriff mit der Blechklammer gelangt. Dadurch kann sich die Verbindung lösen, wenn sich die obere Stange verformt. Auch bei geringen Verformungen ist die Blechklammer nicht mehr formschlüssig an den Stangen gehalten und kann daher klappern. Ferner sind die vorbekannten Blechklammern nur dann gegen Verschieben entlang der Stangen gesichert, wenn sie an seitlichen Anschlägen anliegen. Eine Arretierung der Blechklammern in beide Richtungen entlang der Stange ist nicht vorgesehen.

Die FR 1 335 491 zeigt eine Aufhängevorrichtung, bei der ein Halteelement aus Kunststoff, vorzugsweise aus Nylon vorgesehen ist, in dem Aussparungen vorgesehen sind. In diese Aussparungen können Gitterstäbe eines Korbes oder anderer Elemente eingefügt werden. Zwar weist dieses Kunststoffmaterial eine gewisse Elastizität auf, allerdings können diese Elemente im Haushaltsbereich nicht in Geräten eingesetzt werden, in denen eine höhere Temperatur herrscht.

Die EP 518 540 zeigt einen Halter für Gegenstände, bei denen Stäbe einklemmbar sind. Hierfür weist der Halter eine verschwenkbare Lasche auf, die über eine Rasteinrichtung fixierbar ist. Auch dieser Halter besteht aus Kunststoff und ist daher nicht für den Einsatz bei höheren Temperaturen im Haushaltsbereich vorgesehen.

Die DE 27 01 879 zeigt einen Geschirrkorb für Spülmaschinen, der mittels eines Einschubes in eine Geschirrspülmaschine einfügbar ist. Die Körbe sind dabei an einer Teleskopschiene festgelegt.

Es ist daher Aufgabe der vorliegenden Erfindung ein Schnellbefestigungselement zu schaffen, das sicher an dem Seitenteil gehalten ist, auch wenn größere Kräfte einwirken, und das für unterschiedliche Gittertypen einsetzbar ist. Ferner soll das Schnellbefestigungselement einfach zu montieren sein.

Diese Aufgabe wird mit einem Schnellbefestigungselement mit den Merkmalen des Anspruches 1 gelöst.

Wenn an dem Schnellbefestigungselement eine Nase zwischen dem oberen und dem unteren Halteabschnitt vorgesehen ist, die an der zweiten unteren Stange des Seitenteils anliegt, wird durch das Schnellbefestigungselement der Abstand zwischen den beiden Stangen auch bei einer erheblichen vertikalen Belastung gleich gehalten. Dadurch wird verhindert, dass sich die Stangen voneinander entfernen und womöglich das Schnellbefestigungselement lösen. Ferner wird eine Last an dem Schnellbefestigungselement auf beide Stangen verteilt, so dass die Aufnahme größerer vertikaler Lasten möglich ist. Für eine kostengünstige Herstellung des Schnellbefestigungselements ist dieses ferner einstückig aus einem Metallblech ausgebildet. Dabei können die Nasen durch Stanzen und Biegen hergestellt sein, so dass nur wenige Arbeitsschritte bei der Herstellung erforderlich sind.

Gemäß der Erfindung ist das Schnellbefestigungselement aus einem biegbaren Material gebildet und der untere Halteabschnitt mit der Nase bildet eine Schnappverbindung aus. Dadurch lässt sich das Schnellbefestigungselement auf einfache Weise an einem gitterartigen Seitenteil befestigen. Ferner wird durch die Schnappverbindung das Schnellbefestigungselement form- und kraftschlüssig an dem Seitenteil gehalten, so dass keine Klappergeräusche auftreten können.

Ferner ist eine zweite Nase zwischen dem unteren und dem oberen Halteabschnitt vorgesehen, an der bei Durchbiegung der ersten Stange zu der zweiten Stange hin die erste Stanges anliegt. Diese zweite Nase bildet somit einen Anschlag für die obere Stange aus, so dass auch bei seitlichen Belastungen und/oder Belastungen von unten die beiden Stangen gleichmäßig voneinander beabstandet bleiben und die Kräfte auf beide Stangen übertragen werden.

Gemäß einer bevorzugten Ausgestaltung der Erfindung sind in dem oberen und/oder unteren Halteabschnitt Aussparungen vorgesehen, in die zur Festlegung des Schnellbefestigungselementes eine Kröpfung der ersten oder zweiten Stange oder eine senkrecht zur ersten Stange verlaufende Stange einfügbar ist. Auf diese Weise kann das Schnellbefestigungselement an dem Seitenteil fixiert werden, so dass eine Verschiebung entlang der Stangen nicht möglich ist. Alternativ ist es möglich, an den Stangen Profilierungen vorzusehen, damit an dem Schnellbefestigungselement vorgesehene Abschnitte in die Profilierungen an den Stangen eingreifen, um eine Verschiebung zu verhindern. Ferner können statt der Aussparungen auch Vorsprünge, Verdickungen oder andere Elemente zur Festlegung vorgesehen sein.

Gemäß einer weiteren Ausgestaltung der Erfindung ist zwischen dem oberen und dem unteren Halteabschnitt mindestens ein Mittelabschnitt vorgesehen, der eine weitere Stange des Seitenteils teilweise umgreifen kann. Bei besonders großen Belastungen kann es vorteilhaft sein, die Belastung an dem Schnellbefestigungselement auf drei oder mehr Stangen zu verteilen, so dass entsprechend viele Halteabschnitte an dem Schnellbefestigungselement vorzusehen sind.

Erfindungsgemäß wird auch eine Ausziehführung bereitgestellt, an der mindestens ein erfindungsgemäßes Schnellbefestigungselement vorgesehen ist.

Die Erfindung wird nachfolgend anhand mehrerer Ausführungsbeispiele mit Bezug auf die beigefügten Zeichnungen näher erläutert. Es zeigen:
- Fig. 1: eine perspektivische Ansicht eines ersten Ausführungsbeispieles eines erfindungsgemäßen Schnellbefestigungselementes;
- Fig. 2: eine Seitenansicht des Schnellbefestigungselementes der Fig. 1;
- Fig. 3: eine perspektivische Ansicht des Schnellbefestigungselementes der Fig. 1;
- Fig. 4: eine Draufsicht auf das Schnellbefestigungselement der Fig. 1;
- Fig. 5: eine perspektivische Ansicht einer Ausziehführung mit zwei montierten Befestigungselementen gemäß der Fig. 1;
- Fig. 6: eine perspektivische Ansicht zweier Ausziehführungen nach der Fig. 5, die an einem Seitenteil angebracht sind;
- Fig. 7: eine Seitenansicht des Schnellbefestigungselementes nach der Fig. 1 nach der Montage;
- Fig. 8: eine Seitenansicht des Schnellbefestigungselementes der Fig. 1 im montierten Zustand;
- Fig. 9: eine perspektivische Ansicht eines zweiten Ausrührungsbeispieles, bei dem an einer Ausziehführung zwei Schnellbefestigungselemente vorgesehen sind;
- Fig. 10: eine vergrößerte Ansicht eines montierten Schnellbefestigungselementes der Fig. 9;
- Fig. 11: eine Seitenansicht eines Schnellbefestigungselementes gemäß einer dritten Ausführungsform;
- Fig. 12: eine Seitenansicht eines Schnellbefestigungselementes gemäß einer vierten Ausführungsform;
- Fig. 13: eine perspektivische Ansicht eines Schnellbefestigungselementes gemäß einer fünften Ausführungsform;
- Fig. 14: eine Draufsicht auf das Schnellbefestigungselement der Fig. 13;
- Fig. 15: eine geschnittene Ansicht entlang der Linie A-A der Fig. 14;
- Fig. 16: eine Seitenansicht eines sechsten Ausführungsbeispieles eines erfindungsgemäßen Schnellbefestigungselementes;
- Fig. 17: eine Draufsicht auf das Schnellbefestigungselement der Fig. 16;
- Fig. 18, 19 u. 20: verschiedene Ausführungsformen von Stangen, an denen weitere erfindungsgemäße Schnellbefestigungselemente montierbar sind.

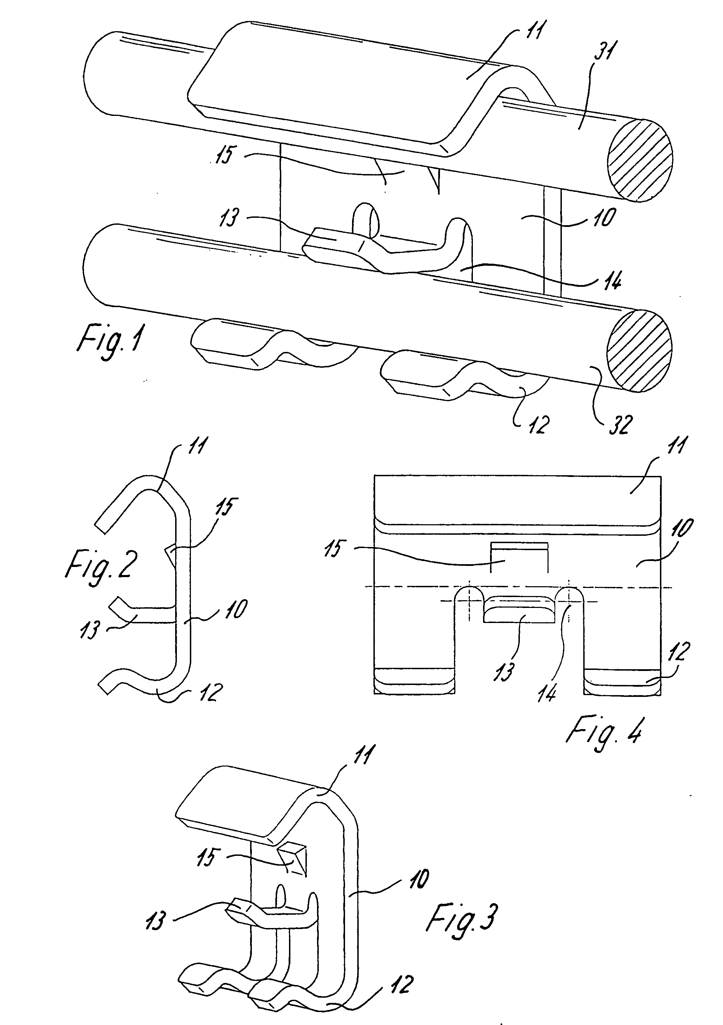

Das in den Figuren 1 bis 4 gezeigte Schnellbefestigungselement 10 weist einen oberen Halteabschnitt 11 und einen unteren geteilt ausgebildeten Halteabschnitt 12 auf. Zwischen den beiden Teilen des Halteabschnitts 12 ist eine Nase vorgesehen, die von dem Schnellbefestigungselement hervorsteht. Zwischen Nase 13 und unterem Halteabschnitt 12 ist ein Spalt 14 ausgebildet. Ferner ist eine Nase 15 in dem Schnellbefestigungselement 10 ausgestanzt, die zu dem oberen Halteabschnitt 11 hin gerichtet ist.

Wie in Fig. 1 gezeigt ist, umgreift der obere Halteabschnitt 11 eine erste Stange 31, wobei zwischen der Nase 15 und der Stange 31 ein kleiner Spalt ausgebildet ist. An dem unteren Halteabschnitt 12 ist eine zweite Stange 32 vorgesehen, die zwischen der Nase 13 und dem unteren Halteabschnitt 12 festgeklemmt ist.

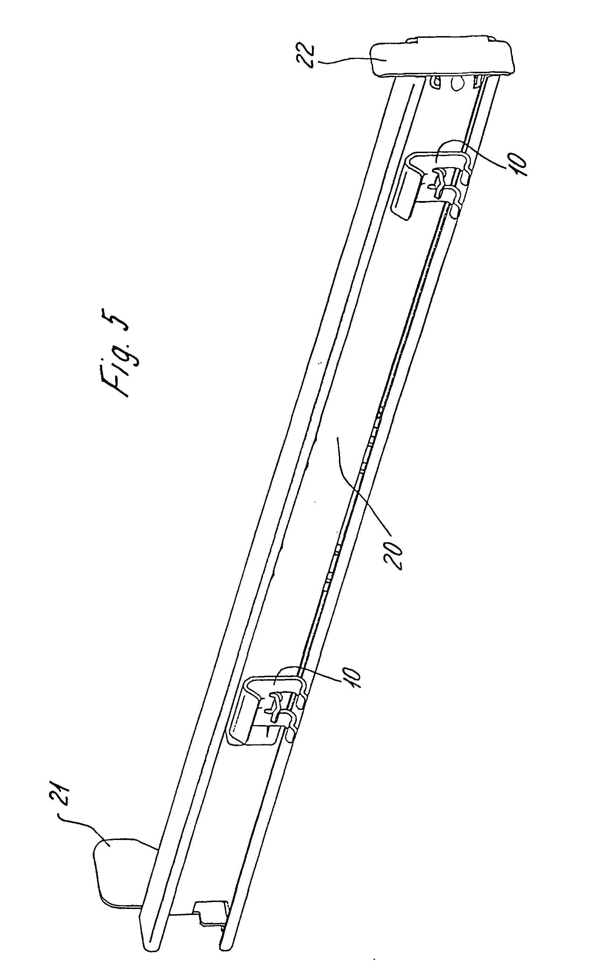

In Fig. 5 ist eine Ausziehführung 20 dargestellt, an der zwei Schnellbefestigungselemente 10 montiert sind. Die Ausziehführung 20 umfasst eine nicht näher gezeigte Gleit-, Kugel- oder Rollenführung sowie nicht näher beschriebene Endanschläge 21, 22. Die Ausziehführung 20 ist über die beiden Schnellbefestigungselemente 10 an einem gitterähnlichen Seitenteil befestigbar. Es ist auch möglich, die Schnellbefestigungselemente 10 zur Montage eines bewegbaren Seitenteiles einzusetzen.

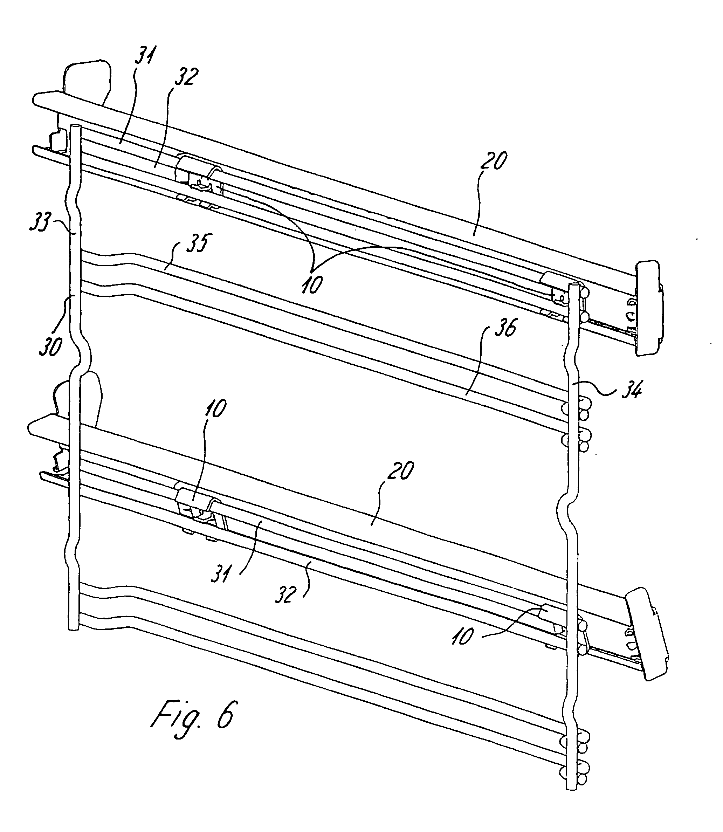

In Fig. 6 ist ein gitterähnliches Seitenteil 30 gezeigt, das eine erste Stange 31 und eine zweite Stange 32 aufweist, an der zwei Schnellbefestigungselemente 10 montiert sind. Das Seitenteil 30 weist ferner eine hintere Vertikalstange 33 und eine vordere Vertikalstange 34 auf. Das vordere Schnellbefestigungselement 10 liegt an der vorderen Vertikalstange 34 an, so dass eine Bewegung des Schnellbefestigungselementes 10 nach vorne nicht möglich ist. Das Seitenteil weist ferner zwei gekröpfte Stangen 35 und 36 auf, die in den Innenraum des Haushaltsgerätes oder des Möbelstückes zeigen und zur Montage oder Führung weiterer Elemente eingesetzt werden können.

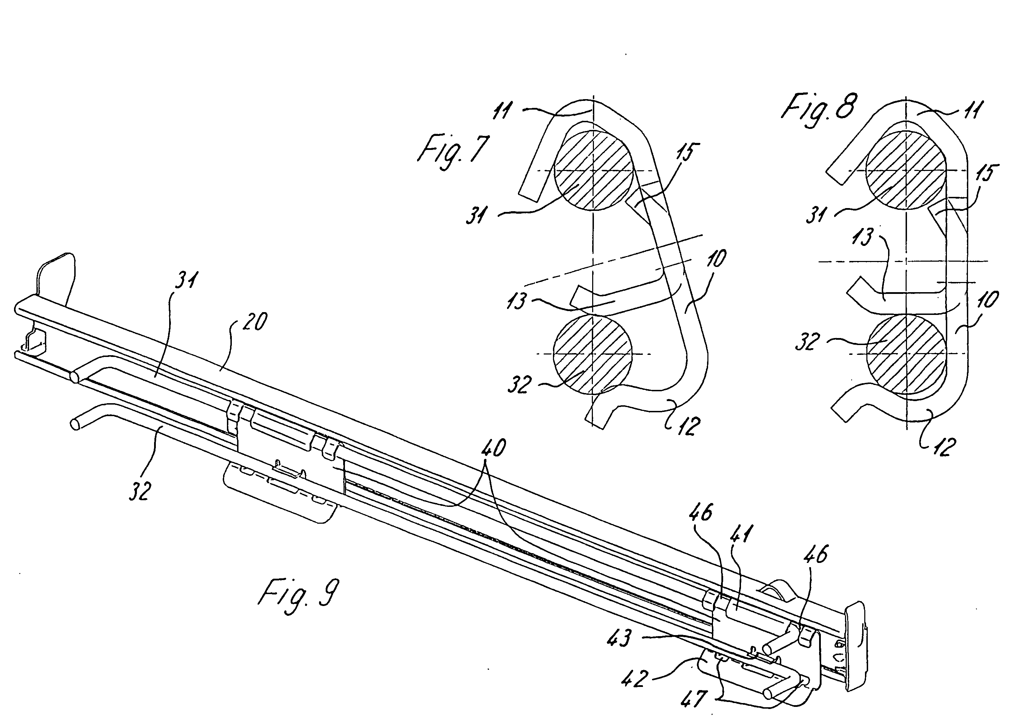

Im unteren Bereich des Seitenteils sind zwei Stangen 31 und 32 vorgesehen, an die gerade eine Ausziehführung 20 mit zwei Schnellbefestigungselementen 10 montiert wird. Hierfür wird die Ausziehführung 20 an den Schnellbefestigungselementen 10 zunächst eingehängt und um die obere Stange 31 verschwenkt. Dieser Vorgang ist im Schnitt in den Figuren 7 und 8 dargestellt. Zunächst wird der obere Abschnitt 11 um die Stange 31 geführt, so dass die obere Stange 31 teilweise umgriffen ist. Anschließend wird der untere Abschnitt 12 und die Nase 13 gegen die Stange 32 gedrückt, so dass sich die Nase 13 und der untere Abschnitt 12 auseinanderbewegen und nach Art einer Schnappverbindung um die untere Stange 32 greifen. Da das Schnellbefestigungselement 10 aus einem elastischen Metallblech gefertigt ist, liegt die Nase 13 und der untere Abschnitt 12 kraftschlüssig an der unteren Stange 32 an.

Im montierten Zustand wird bei einer Vertikalbelastung von oben durch die Nase 13 der Abstand zwischen den Stangen 31 und 32 im wesentlichen konstant gehalten. Dadurch wird die Kraftaufnahme vergleichmäßigt und wird verhindert, dass sich die Verbindung des Schnellbefestigungselements lösen kann. Bei einer seitlichen Belastung bzw. Belastung von unten sorgt die Nase 15 dafür, dass die obere Stange 31 bei größerer Durchbiegung der Stange 32 mit nach oben bewegt wird, so dass der Abstand zwischen den Stangen 31 und 32 im wesentlichen konstant gehalten ist.

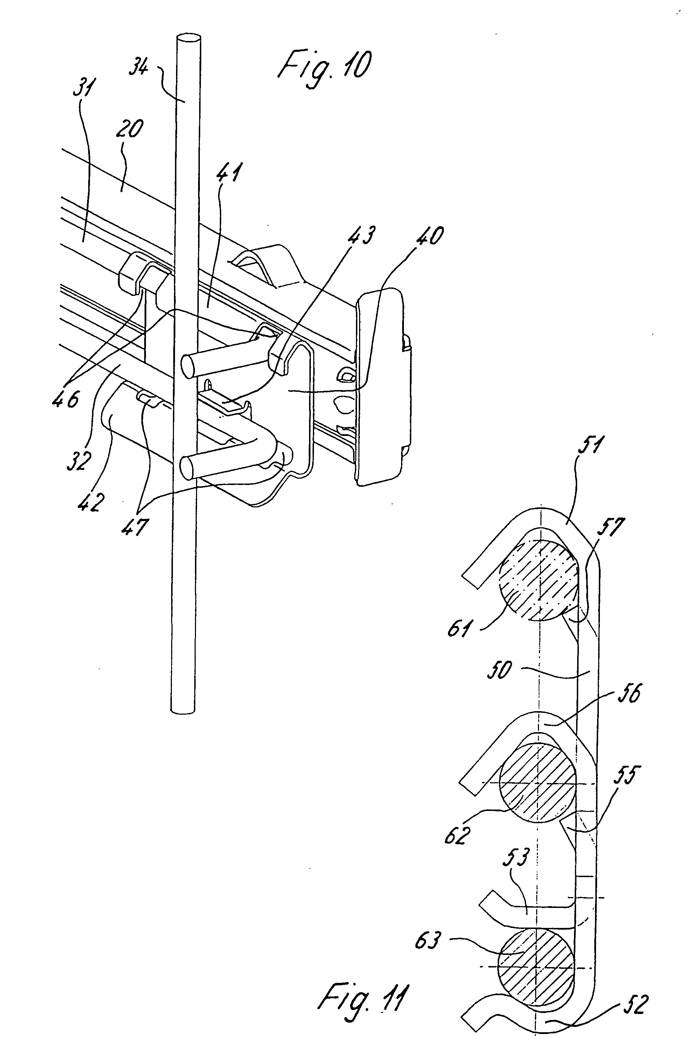

In den Fig. 9 und 10 ist ein zweites Ausführungsbeispiel eines erfindungsgemäßen Schnellbefestigungselementes 40 gezeigt, das an einer Ausziehführung 20 montiert ist. Das Schnellbefestigungselement 40 weist einen oberen Halteabschnitt 41, einen unteren Halteabschnitt 42 sowie eine Nase 43 auf, die an einer oberen Stange 31 bzw. unteren Stange 32 anliegen. In dem oberen Halteabschnitt 41 sind zwei Aussparungen 46 vorgesehen, wobei die eine Aussparung 46 von einer Kröpfung der Stange 31 durchgriffen ist. Der untere Halteabschnitt 42 weist ebenfalls zwei Aussparungen 47 auf, wobei die eine Aussparung 47 von der unteren Stange 32 durchgriffen ist. Die beiden Kröpfungen der Stangen 31 und 32 fixieren das Schnellbefestigungselement 40, so dass dieses nicht entlang der Stangen 31 und 32 verschoben werden kann. Es ist auch möglich, durch die Aussparungen 46 und 47 Profilierungen oder Vertikalstangen durchzuführen, um ein Verschieben des Schnellbefestigungselementes 40 zu verhindern.

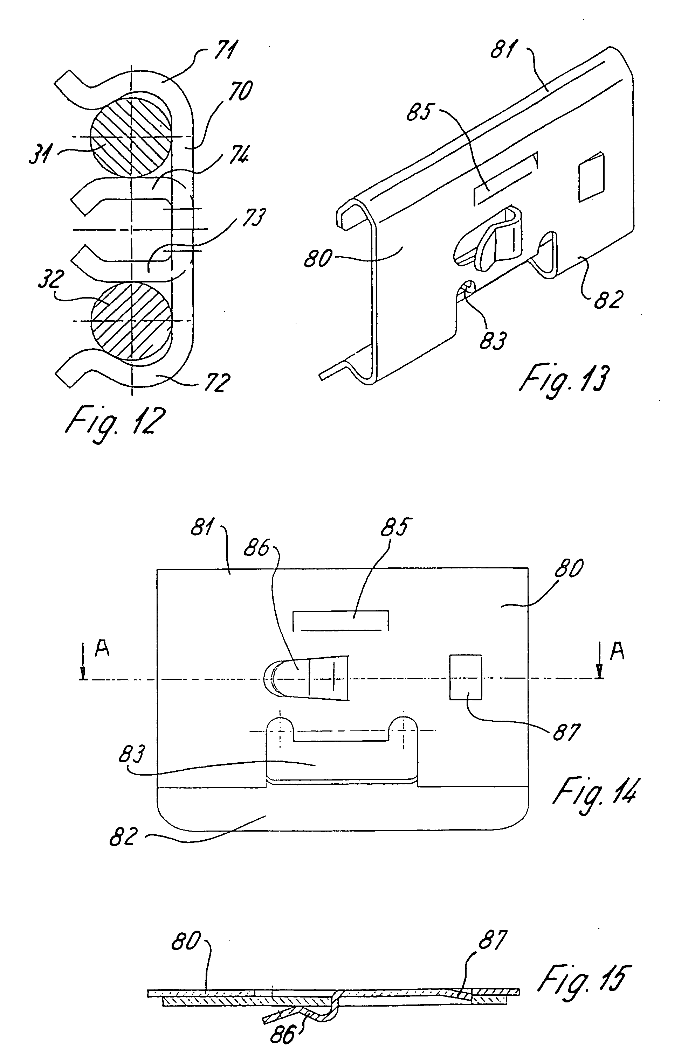

In Fig. 11 ist ein drittes Ausführungsbeispiel eines Schnellbefestigungselementes 50 gezeigt, das zwischen einem oberen Halteabschnitt 51 und einem unteren Halteabschnitt 52 einen mittleren Halteabschnitt 56 aufweist. Die Halteabschnitte 51, 52 und 56 umgreifen jeweils teilweise eine Stange 61, 62 und 63, wobei die Stangen über Nasen 53, 55 und 57 abgesichert sind. Durch die Aufnahme von drei Stangen 61, 62, 63 an dem Schnellbefestigungselement 50 können größere Kräfte aufgenommen werden, so dass dieses Schnellbefestigungselement 50 auch für große Lasten einsetzbar ist. Es ist auch möglich, mehr Halteabschnitte für entsprechende Stangen vorzusehen.

In Fig. 12 ist ein weiteres Ausführungsbeispiel eines Schnellbefestigungselementes 70 gezeigt, bei dem eine obere Stange 31 und eine untere Stange 32 kraftschlüssig von dem Schnellbefestigungselement 70 umgeben ist. Hierfür ist gegenüber dem oberen Halteabschnitt 71 eine Nase 74 und gegenüber dem unteren Halteabschnitt 72 eine Nase 73 ausgebildet, die im montierten Zustand an den Stangen 31 bzw. 32 anliegen. Die symmetrische Ausgestaltung der Schnellbefestigungselemente 70 erfordert keine gesonderten Teile für rechte oder linke Seitenwände, was die Montage erleichtert. Außerdem ist keine lagegenaue Anbringung im Sinne von oben oder unten erforderlich, da das Schnellbefestigungselement auch um eine horizontale Ebene spiegelbildlich ausgebildet ist.

In den Figuren 13 bis 15 ist eine weitere Ausführungsform eines Schnellbefestigungselementes 80 gezeigt. Das Schnellbefestigungslement 80 weist einen oberen Halteabschnitt 81 und einen unteren Halteabschnitt 82 auf, wobei zwischen den Halteabschnitten 81 und 82 Nasen 83 und 85 ausgebildet sind. Ferner ist eine gebogene Haltenase 86 und eine Rastnase 87 zwischen dem oberen Halteabschnitt 81 und dem unteren Halteabschnitt 82 vorgesehen. Haltenase 86 und Rastnase 87 ermöglichen eine lösbare Schnellverbindung zwischen Ausziehführung 20 und Schnellbefestigungselement 10, wobei die Rastnase 87 ein unbeabsichtigtes Verschieben und damit ein unbeabsichtigtes Lösen verhindert. (Fig. 15)

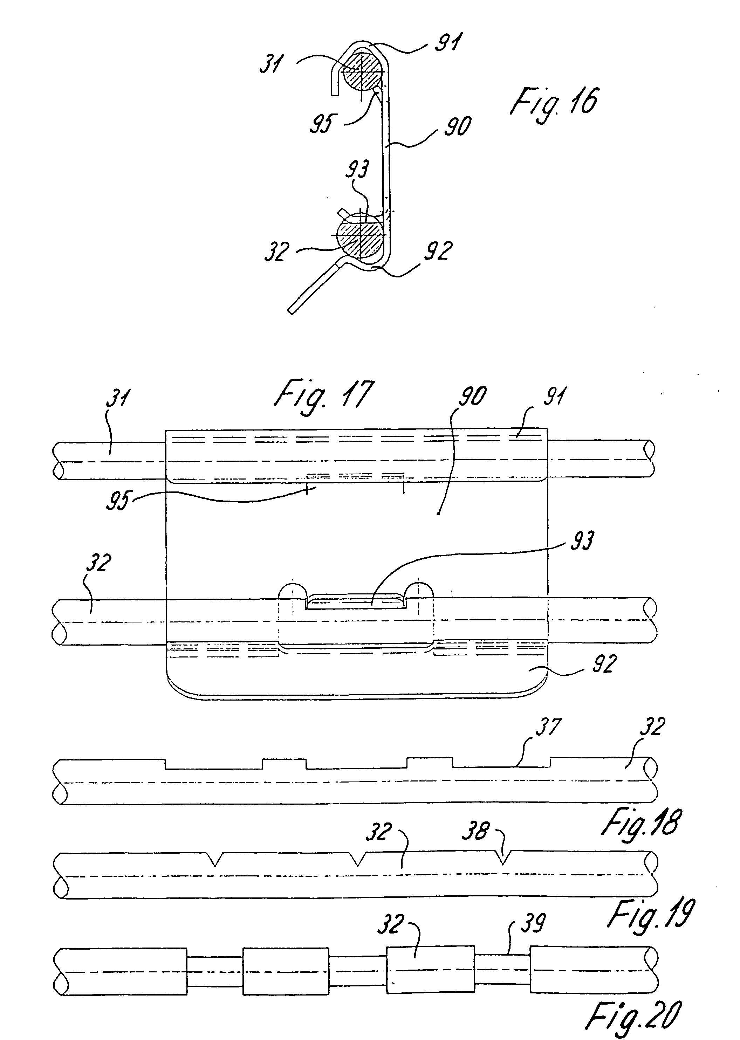

Bei dem in Fig. 16 und 17 gezeigten Ausführungsbeispiel ist ein Schnellbefestigungselement 90 über einen oberen Halteabschnitt 91 und einen unteren Halteabschnitt 92 an zwei Stangen 31 und 32 befestigt. Die untere Stange 32 weist eine Aussparung auf, in die die Nase 93 des Schnellbefestigungselementes 90 eingreift. Dadurch ist das Schnellbefestigungselement 90 gegen Verschieben der Stange 32 gesichert. Eine entsprechend ausgebildete Stange mit Aussparungen 37 ist in Fig. 18 dargestellt.

Statt der Nase 93 können auch andere Halteelemente an dem Schnellbefestigungselement 90 vorgesehen sein, die beispielsweise in Kerben 38 an der Stange 32 (Fig. 19) eingreifen. Ferner können Aussparungen 39 an der Stange 32 vorgesehen sein, so dass Klemmelemente in benachbarte Aussparungen 39 eingreifen und verdickte Abschnitte an der Stange 32 umgreifen (Fig. 20).

## Patentansprüche

1. Schnellbefestigungselement (10, 40, 50, 70, 80, 90), insbesondere zur Befestigung von Führungsschienen an gitterähnlichen Seitenteilen (30), das einstückig aus einem biegbaren Metallblech ausgebildet ist, mit einem oberen Halteabschnitt (11, 41, 51, 71, 81), der im Gebrauch eine erste Stange (31, 61) eines Seitenteiles zumindest teilweise umgreift, und einem unteren Halteabschnitt (12, 42, 52, 72, 82), der im Gebrauch eine im wesentlichen parallel zur ersten Stange (31, 61) verlaufende zweite Stange (32, 63) des Seitenteiles zumindest teilweise umgreift, wobei eine Nase (13, 43, 53, 73, 83, 93) zwischen dem oberen und dem unteren Halteabschnitt vorgesehen ist, die im Gebrauch an der zweiten unteren Stange (32, 63) des Seitenteiles anliegt, wobei der untere Halteabschnitt (12, 42, 52,72, 82) mit der Nase (13, 43, 53, 73, 83, 93) eine Schnappverbindung für die zweite Stange ausbildet, wenn das Schnellbefestigungselement (10, 40, 50, 70, 80, 90) zu seinem Montieren am Seitenteil um die erste Stange (31, 61) verschwenkt wird, und wobei eine zweite Nase (15, 45, 55, 75, 85, 95) zwischen dem unteren und dem oberen Halteabschnitt vorgesehen ist, an der bei Durchbiegung der ersten Stange (31, 61) zu der zweiten Stange (32, 63) hin die erste Stange anliegt.

2. Schnellbefestigungselement nach Anspruch 1, **dadurch gekennzeichnet, dass** in dem oberen und/oder unteren Halteabschnitt Aussparungen (46, 47) vorgesehen sind, in die zur Festlegung des Schnellbefestigungselementes eine Kröpfung der ersten oder zweiten Stange oder eine senkrecht zur ersten Stange verlaufende Stange einfügbar ist.

3. Schnellbefestigungselement nach Anspruch 1 oder 2, **dadurch gekennzeichnet, dass** zwischen dem oberen und unteren Halteabschnitt mindestens ein Mittelabschnitt (56) vorgesehen ist, der eine weitere Stange (62) des Seitenteils teilweise umgreifen kann.

4. Schnellbefestigungselement nach einem der Ansprüche 1 bis 3, **dadurch gekennzeichnet, dass** an dem Schnellbefestigungselement Profilierungen (86, 87) vorgesehen sind, die eine lösbare Schnellverbindung zwischen einer Ausziehführung (20) und dem Schnellbefestigungselement (10) ermöglichen.

5. Ausziehführung, die an einem mit längs- und querverlaufenden Stangen (31, 32) versehenen Seitenteil befestigbar ist, **dadurch gekennzeichnet, dass** an der Ausziehführung mindestens ein Schnellbefestigungselement nach einem der vorhergehenden Ansprüche vorgesehen ist.

## Claims

1. Quick-action fastening element (10, 40, 50, 70, 80, 90), in particular for fastening guide rails to grid-like side parts (30), which is formed in one piece from a flexible metal sheet and has an upper retaining portion (11, 41, 51, 71, 81), which at least partially surrounds a first rod (31, 61) of a side part when in use, and a lower retaining portion (12, 42, 52, 72, 82), which at least partially surrounds a second rod (32, 63) (which runs essentially parallel to the first rod (31, 61)) of the side part when in use, with a lug (13, 43, 53, 73, 83, 93) being provided between the upper and the lower retaining portion and bearing against the second lower rod (32, 63) of the side part when in use, with the lower retaining portion (12, 42, 52, 72, 82) and the lug (13, 43, 53, 73, 83, 93) forming a snap-action connection for the second rod when the quick-action fastening element (10, 40, 50, 70, 80, 90) is pivoted about the first rod (31, 61) in order to be mounted on the side part, and with a second lug (15, 45, 55, 75, 85, 95) being provided between the lower and the upper retaining portion, and the first rod bearing against the said second lug when the first rod (31, 61) is deflected towards the second rod (32, 63).

2. Quick-action fastening element according to Claim 1, **characterized in that** cutouts (46, 47) are provided in the upper and/or lower retaining portion(s), and an angled section of the first or second rod, or a rod which runs perpendicular to the first rod, can be inserted into the said cutouts in order to secure the quick-action fastening element.

3. Quick-action fastening element according to Claim 1 or 2, **characterized in that** at least one middle portion (56) is provided between the upper and lower retaining portions and can partially surround a further rod (62) of the side part.

4. Quick-action fastening element according to one of Claims 1 to 3, **characterized in that** profiled sections (86, 87) are provided on the quick-action fastening element and permit a releasable quick-action connection between a pull-out guide (20) and the quick-action fastening element (10).

5. Pull-out guide which can be fastened to a side part which is provided with longitudinally and transversely running rods (31, 32), **characterized in that** at least one quick-action fastening element according to one of the preceding claims is provided on the pull-out guide.

## Revendications

1. Elément de fixation rapide (10, 40, 50, 70, 80, 90), en particulier pour la fixation de rails de guidage sur des parties latérales (30) de type grille, lequel est réalisé d'une seule pièce dans une tôle métallique flexible, avec un tronçon de retenue supérieur (11, 41, 51, 71, 81) qui, pendant l'utilisation, entoure au moins en partie une première barre (31, 61) d'une partie latérale, et avec un tronçon de retenue inférieur (12, 42, 52, 72, 82) qui, pendant l'utilisation, entoure au moins en partie une deuxième barre (32, 63) de la partie latérale, s'étendant sensiblement parallèlement à la première barre (31, 61), un ergot (13, 43, 53, 73, 83, 93), prévu entre le tronçon de retenue supérieur et le tronçon de retenue inférieur, s'appliquant, pendant l'utilisation, contre la deuxième barre inférieure (32, 63) de la partie latérale, le tronçon de retenue inférieur (12, 42, 52, 72, 82) réalisant avec l'ergot (13, 43, 53, 73, 83, 93) une liaison par encliquetage pour la deuxième barre lorsque l'élément de fixation rapide (10, 40, 50, 70, 80, 90) est pivoté pour son montage sur la partie latérale autour de la première barre (31, 61), et un deuxième ergot (15, 45, 55, 75, 85, 95) étant prévu entre le tronçon de retenue inférieur et le tronçon de retenue supérieur, vers et contre lequel la première barre s'applique lorsque la première barre (31, 61) se plie vers la deuxième barre (32, 63).

2. Elément de fixation rapide selon la revendication 1, **caractérisé en ce que** dans le tronçon de retenue supérieur et/ou le tronçon de retenue inférieur sont prévues des découpes (46, 47) dans lesquelles peut être inséré, pour la fixation de l'élément de fixation rapide, un coude de la première ou de la deuxième barre ou une barre s'étendant perpendiculairement à la première barre.

3. Elément de fixation rapide selon la revendication 1 ou 2, **caractérisé en ce qu'**au moins un tronçon central (56), qui peut entourer en partie une autre barre (62) de la partie latérale, est prévu entre le tronçon de retenue supérieur et le tronçon de retenue inférieur.

4. Elément de fixation rapide selon l'une des revendications 1 à 3, **caractérisé en ce que** sur l'élément de fixation rapide sont prévus des profilages (86, 87) qui permettent une liaison rapide séparable entre un guide d'extraction (20) et l'élément de fixation rapide (10).

5. Guide d'extraction qui peut être fixé sur une partie latérale pourvue de barres (31, 32) s'étendant longitudinalement et transversalement, **caractérisé en ce que** sur le guide d'extraction est prévu au moins un élément de fixation rapide selon l'une des revendications précédentes.
